# EUROPEAN PATENT SPECIFICATION

(11) **EP 2 090 419 B1**
(45) Date of publication and mention of the grant of the patent: **25.12.2013**
(21) Application number: 08002744.4
(22) Date of filing: 14.02.2008
(51) Int. Cl.: B29C 73/16

(54) **Sealing apparatus**
Versiegelungsvorrichtung
Appareil d'obturation

(43) Date of publication of application: 19.08.2009
(73) Proprietor: SUMITOMO RUBBER INDUSTRIES, LTD., Kobe-shi, Hyogo 651-0072 (JP)
(72) Inventor: Eckardt, Arnold, 63691 Ranstadt (DE)
(74) Representative: Manitz, Finsterwald & Partner GbR

(56) References cited:
- EP-B- 1 722 961
- WO-A-2008/035163
- US-B2- 6 736 170

## Description

The invention relates to an apparatus for the sealing of inflatable articles, in particular tires and has a pressure-tight container for receiving a sealant, the container having a connection element, a removal unit for connection to the connection element of the container, a gas inlet and an outlet in the removal unit which communicate via the internal space of the container and a non-return valve which is provided in the gas inlet. The invention relates furthermore to a removal unit which can in particular be used with such an apparatus.

Such apparatuses serve to seal a leak in an inflatable article, for example in a punctured tire or a tire which has been damaged during travel in that a special sealant is introduced via the tire valve into the tire and the tire is subsequently pumped up, at least to a pressure at which it can be driven again.

For this purpose a pressure-tight container with a sealant, such as is described for example in DE 196 52 546 A1 is connected to a removal unit. The removal unit has a gas inlet through gas which can be introduced into the container and an outlet which can be connected to the valve of the damaged tire. A compressor is connected either inside of the removal unit or to the inlet of the removal unit, with the aid of which an elevated pressure can be generated in the container through the gas inlet of the removal unit. Through this elevated pressure the sealant is pressed through the outlet in the direction of the damaged tire as is described in EP 1 121 324 B1.

In order to prevent sealing material being able to move in the direction of the compressor it is proposed in WO 03/004328 A1 to provide a non-return valve in the gas inlet.

An apparatus for the sealing of inflatable articles having the features of the preamble of claim 1 and a removal unit having the features of the preamble of claim 8 are known from US 6,736,170 B2.

It is the object of the present invention to set out an apparatus for the sealing of inflatable articles and a corresponding removal unit which are simple to manufacture and enable a reliable operation.

This object is satisfied with an apparatus for the sealing of inflatable articles having the features of claim 1 and with a removal unit having the features of claim 8. Subordinate claims are directed to preferred embodiments.

In an apparatus in accordance with the invention, or in a removal unit in accordance with the invention, the non-return valve is provided in an end section of the gas inlet which opens into the container without being deflected when the removal unit is connected to the container. The non-return valve consists of a closure element, preferably a ball, which is sealingly pressed against a valve seat by elevated pressure in the container.

This arrangement enables a particularly simple and cost-favourable manufacture. The non-return valve is provided at the end of the gas inlet and is easy to reach in this manner through the gas inlet. In an otherwise completely finished removal unit the closure element of the non-return valve only has to be introduced through the gas inlet.

The closure element lies on the valve seat of the non-return valve and seals the gas inlet to the extent that elevated pressure prevails in the container and thus at the end of the gas inlet. Such an elevated pressure can for example arise when the compressor switches off during the pumping of the sealings into the tire or when residual pressure is present in the tire on connection of the apparatus to the tire.

Sealing medium from the container can in this manner not enter into the gas inlet of the removal unit. The gas pressure source with which elevated pressure is generated in the container through the gas inlet in order to press the sealant out of the outlet is protected against backwardly flowing sealant. The layout of the so disposed non-return valve is particularly simple and requires only the introduction of the closure element into the gas inlet of the removal unit.

A simple design provides that the gas inlet and the outlet are coaxially arranged in the region of the end section of the gas inlet. In this arrangement the outlet surrounds the gas inlet in which the non-return valve is provided. On the one hand, the gas inlet containing the non-return valve is effectively protected against external influences such as for examples jolts etc. and, on the other hand, the gas inlet is readily accessible in order to introduce the closure element.

The inventive arrangement is of advantage since the end section of the gas inlet projects beyond the removal unit so that the closure element can be reliably introduced.

For the reliable operation it is advantageous when measures are taken so that the closure element cannot leave the gas inlet, i.e. the closure element can in particular not be thrown out of the gas inlet into the container when an elevated pressure is applied to the gas inlet with the aid of a compressor. For example, a corresponding net can be placed over the gas inlet for this purpose after the introduction of the closure element. A particularly simple design however provides that after the introduction of the closure element into the gas inlet a deformation of the gas inlet is effected which is designed in such a way that the closure element cannot pass it.

In this connection it can in particular prove to be advantageous when, in accordance with the above-described embodiments, the gas inlet is provided within the outlet and/or the end section of the gas inlet projects beyond the rest of the removal unit.

To effect the deformation, the end section for example can be squeezed together a little from the outside, to which end it may for example be formed from thin metal. The squeezing together can take place by hand or by a corresponding crimping or indenting apparatus.

Another preferred embodiment, in particular for an end section formed from plastic, provides for the outer end of the end section to have projecting lugs at least projecting to the inside. These lugs can be formed in a simple manner for example by a hot embossing process.

It is particularly advantageous when the non-return valve is provided in a region of the gas inlet which is vertically aligned and the valve seat is arranged beneath the closure element when the removal unit is connected to the connection element of the container and the container stands on its head. In order to ensure that the sealant is pressed through the outlet into the tire, the arrangement during sealing is as a rule operated with the container standing on its head. The described advantageous embodiment, with the non-return valve in a vertical section of the gas inlet and with a valve seat arranged beneath the closure element, ensures, in this mode of operation, that the closure element comes to lie sealingly in the valve seat, simply as a result of gravity, for example when the gas pressure source is switched off during the sealing process or when the arrangement is placed on its head without the gas pressure source being connected.

The removal unit can directly contain the gas pressure source, for example a compressor. An arrangement in which the removal unit has a connection to the end of the gas inlet which is spaced from the container is however particularly flexible, in order to be able to connect an external gas pressure source. A modular construction of this kind is in particular advantageous with the tight special conditions in a motor vehicle when the apparatus is not in use and must for example be stowed in the trunk.

Both the container and also the removal unit can be manufactured of plastic, preferably plastic which is capable of being recycled. This enables a cost favourable and simple manufacture, for example as an injection moulded part. Further, with a plastic member, the above described deformation of the end section of the gas inlet can be achieved with the help of a hot embossing process in an easy way.

The entire removal unit can be manufactured as a one-piece plastic part and in the final working step it is only necessary to introduce the closure element into the gas inlet.

The invention will be explained by way of example in detail with reference to the accompanying Figures which show:
- Fig. 1: an embodiment of an apparatus in accordance with the invention in a side section,
- Fig. 2: a detail of the removal unit of this embodiment in a first installation state,
- Fig. 3: the detail of Fig. 2 in a second installation state, and
- Fig. 4: a corresponding detail of another embodiment in a second installation state, in a sectional view from the side (Fig. 4a) and in a top view (Fig. 4b).

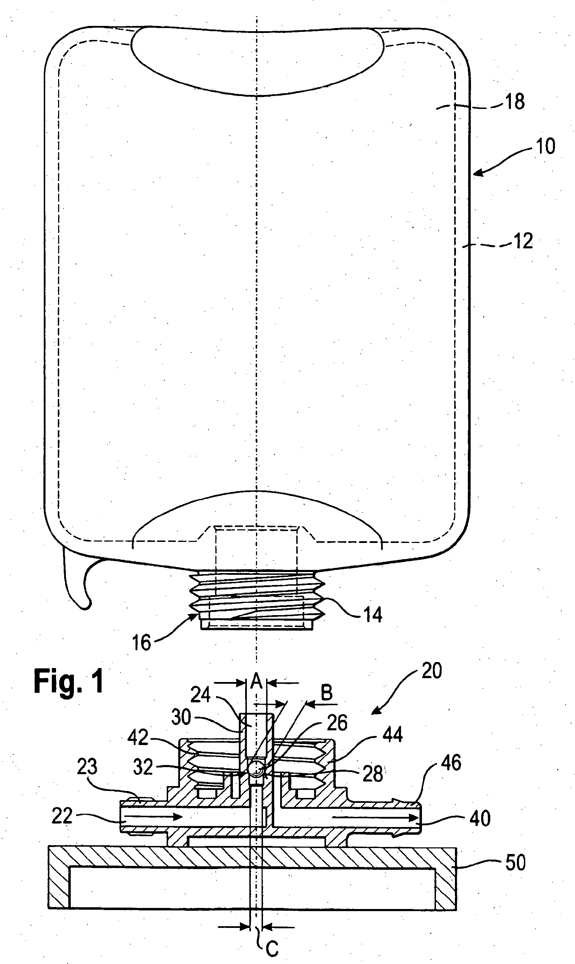

In the embodiment of the invention in accordance with Fig. 1 the sealing apparatus has a pressure-tight container 10 of bottle-like shape made of plastic which is capable of being recycled. It includes a container wall 12 which surrounds a container inner space 18 in which the sealant is received. The container 10 has a somewhat cylindrical connection stub 16 which is formed in a manner of a bottle neck and which has an external thread 14 and forms the connection element of the container.

Other embodiments include other connection possibilities such as for example an internal thread or latch devices or an internal thread recessed within the container.

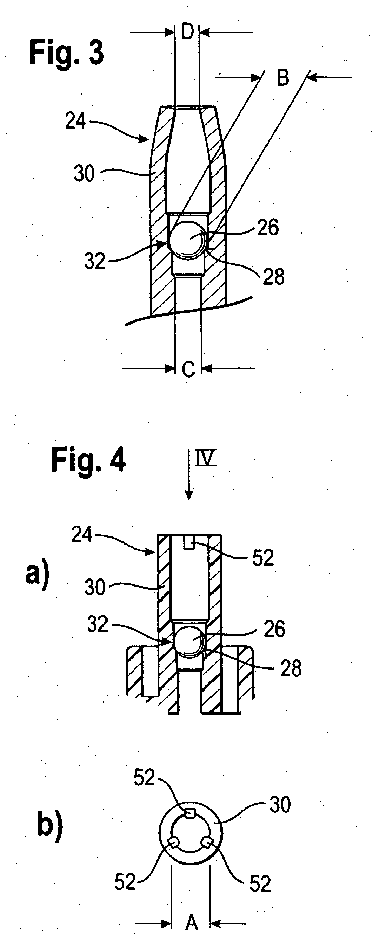

A removal unit 20 which is likewise manufactured generally or entirely of a plastic capable of being recycled includes a gas inlet 22 which has a cylindrical end section 24 projecting beyond the rest of the removal unit and which is surrounded by a wall 30. In the finished installed state the upper end of the end section 24 of the gas inlet 22 at least partly has a reduced internal dimension, as will be explained with reference to Fig. 3 and Fig. 4, but which is not however shown in Fig. 1 for the sake of clarity.

For the connection to a gas pressure source, for example to a compressor, the gas inlet 22 has an inlet tube 23 onto which a corresponding connection hose can be plugged.

The removal unit 20 moreover has a tube stub 44 which has an internal thread 42. This inner thread 42 matches the outer thread 14 of the container 10. If the container 10 is screwed onto the removal unit 20 the end section 24 of the gas inlet 22 points into the container 10.

In the gas inlet 22, and in particular in the end section 24, there is a valve seat 28, with the gas inlet having a round cross-section in the region of the valve seat. For the formation of the valve seat the internal diameter of the end section 24 of the gas inlet 22 reduces conically in this region from a larger diameter A at the open end of the end section 24 of the gas inlet 22 to a small internal diameter C. In the use of the sealing apparatus during the sealing process, which has yet to be described and in which the removal unit is arranged beneath the container 10, the region of the smaller diameter C is accordingly located beneath the region of the larger diameter A.

The valve seat 28 forms, in cooperation with a ball 26, a non-return valve 32. For this purpose the ball 26 has an outer diameter B which is, on the one hand, smaller than the larger inner diameter A of the end section 24 of the gas inlet 22 and is, on the other hand, larger than the reduced diameter C of the gas inlet 22 beneath the valve seat 28.

The tube stub 44 with the internal thread 42 surrounds the end section 24 of the gas inlet coaxially. The inner space of the tube stub 44 is part of the outlet 40 of the removal unit 20 which is connected to an outlet tube 46 onto which for example a hose can be plugged in order to connect the removal unit 20 to the valve of a tire to be sealed.

A standing frame 50 is shown purely schematically in Fig. 1 to which the removal unit 20 is secured or which is included in the removal unit 20. This is for example a tripod or a quadripod which enables secure standing during the operation of the sealing apparatus.

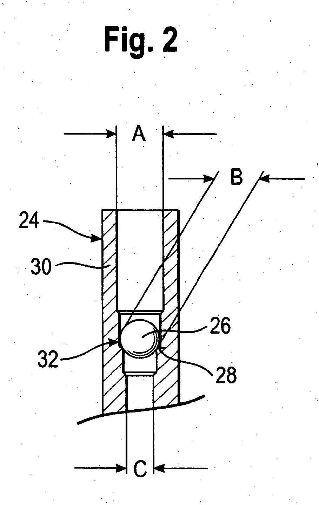

In Fig. 2 the end section 24 of the housing 22 is shown once again in an enlarged detail. Whereas Fig. 2 shows the end section 24 in a stage shortly after the ball 26 has been introduced, Fig. 3 and 4 each show an installation state following this of two different embodiments, respectively.

In an embodiment of Fig. 3, after insertion of the ball 26, the upper end of the gas inlet 22, which may be metallic, is pressed together for example by hand whereby the wall 30 has lost its cylindrical shape at the end without however being completely closed. In this way the internal extent of the end section 24 of the gas inlet 22 has been reduced in one spatial direction to an internal measure D which is smaller than the outer diameter B of the ball 26. The ball 26 can accordingly no longer pass through the end of the end section 24 of the gas inlet 22.

The internal diameter A of the end section 24 for example can be 4 mm and the diameter B of the ball 26 3.6 mm. The internal diameter C of the gas inlet 22 beneath the valve seat 28 then for example is 2.5 mm. The reduced internal dimension B in any case must be smaller than the diameter B of the ball 26, that is, smaller than 3.6 mm for the described dimensions.

Fig. 4a shows another embodiment in a sectional view from the side and Fig. 4b shows a top view seen in the direction IV as indicated in Fig. 4a.

In this embodiment, the entire removing unit 20 is formed from a moulded plastic part and may be connected to a standing frame 50. The injection moulding process is carried out such that the end of the gas cylinder 24 still has the internal diameter A. In a next step, the ball 26 is introduced through the opening in the end section 24 of the gas inlet and falls onto the valve seat 28.

For forming the projecting lugs 52, a hot embossing tool is used. This can for example be a hot embossing stamp with projections projecting downwardly or radially to the outside and which are disposed for example in the form of a star with an angle of 120 degrees between each other. The tool can be pressed into or on the end section 24 of the gas inlet 22. By way of the heated projections, the tool melts the edge of the opening of the end section 24 at the locations of the projections. The thus forming semi-fluid plastic of the end section of the gas inlet 22 moves a little downward and forms the projecting lugs 52 projecting at least also inwardly. These locally reduce the internal dimension of the opening of the end section 24, which is visible in the top view of Fig. 4b. Due to this reduction, it is impossible for the ball 26 to leave the opening of the end section 24.

In the deformation step it is particularly favourable that in these embodiments the end section 24 projects beyond the rest of the removal unit so that the wall 30 of the end section 24 is easily accessible in order to bring about the indenting or the compression.

In the state of Fig. 3 or 4 the ball can thus only move from the valve seat 28 up to the region of the reduced internal dimension D of the end section 24 or to the projecting lugs 52, respectively.

In operation the sealing apparatus of the invention and the removal unit 20 of the invention are used as follows:

The container 10 contains a liquid sealant. The removal unit 20 is placed with the aid of the standing frame 50 on the ground. A non-indicated filling line is plugged onto the outlet tube 46 and is connected at its other end to the valve of the tire to be sealed in a manner known per se. Any residual pressure which may still be present in the tire to be sealed can now escape through the filling line and the connection 40.

The connection stub 16 of the container 10 is screwed into the internal thread 42 and is thus positioned inverted. In doing so the end of the end section 24 of the gas inlet 22 penetrates a foil-like cover which is optionally provided at the connection stub 16 in order to provide access to the container 10.

In a container 10, which does not have a cover foil on the connection stub 16, the removal unit is first screwed onto the container and the entire arrangement is then first brought into a position in which the container is inverted

In any event the ball 26 of the non-return valve 32 prevents the entry of sealant from the container 10 into the gas inlet 22 even when the container 10 is arranged inverted.

A gas pressure source, for example a small compressor, is connected to the inlet tube 23 of the gas inlet 22 in a manner known per se. Air is forced by this gas pressure source through the gas inlet 22. The ball 26 thus lifts out of the valve seat 28 and permits the pumping of air into the container 10.

Through the pressing together of the end of the end section 24 of the gas inlet 22 as described above for the embodiment of Fig. 3 its internal dimension is reduced in one spatial direction for example to the internal dimension D which is smaller than the outer diameter B of the ball 26. The end section 24 has in this connection lost its circular cross-sectional shape. Inherently, the internal dimension of the end section 24 has increased in another spatial direction. Through the deformation of the end section 24 of the gas inlet 22 which has been carried out in this way it is thus ensured that the ball 26 cannot emerge from the end section 24 of the gas inlet 22. Nevertheless, gas can flow around the ball since the internal dimension of the end section 24 has been enlarged in another spatial direction. If the ball is for example lifted out of the valve seat 28 by pressure generated with a gas pressure source connected to the inlet tube 23 of the gas inlet 22 then it moves up to the region of the reduced internal dimension D of the end section 24 of the gas inlet 22 but cannot pass it because of its larger diameter B. Nevertheless, in this position gas can flow around the ball.

Through the hot embossing process for forming the projecting lugs 52 as described above for the embodiment of Fig. 4, it is also ensured for an embodiment being formed as a plastic moulded part, that the ball 26 cannot leave the end section 24 of the gas inlet 22, since the projecting lugs 52 prevent this. Nevertheless, also in this case, gas can flow around the ball between the projecting lugs. If the ball is for example lifted out of the valve seat 28 by pressure generated with a gas pressure source connected to the inlet tube 23 of the gas inlet 22 then it moves up to the projecting lugs 52 in the end section 24 of the gas inlet 22 which it cannot pass. Nevertheless, in this position gas can flow around the valve.

The sealant located in the container is pressed through the outlet 40 and the non-illustrated filling line into the tire to be sealed.

When the required quantity of sealant has been introduced into the tire to repair the tire leak and when a residual quantity of sealant is present in the container 10 the sealing apparatus of the invention is turned through 180° and placed on the base of the container.

The sealant now collects at the side of the container 10 remote from the removal unit 20 in the region of the base of the container so that the gas which still flows through the gas inlet 22 into the container flows directly into the outlet 40 and into the tire. In this manner the tire can be blown up to its operating pressure directly following the introduction of the sealant, or at least to a pressure at which the relevant vehicle can travel a certain distance.

As is described above, the special design and arrangement of the non-return valve 32 in the removing unit 20 enables the simple installation of the non-return valve. The ball 26 only simply has to be introduced through the opening into the end section 24 of the gas inlet 22 and for example the end of the end section 24 is squeezed together in one direction to a smaller diameter D (Fig. 3) or the lugs 52 projecting inwardly are formed with a hot embossing process (Fig. 4).

The particular arrangement of the non-return valve 32 however in particular also ensures reliable operation. If residual pressure is still present in the tire during installation of the container 10 onto the removal unit 20, then this cannot lead to the sealant being pressed out of the container 10 through the gas inlet 22 in the direction of the compressor. This is prevented by the ball 26 which is pressed against the valve seat 28 by the elevated pressure from the tire acting through the container 10 and insofar prevents passage of the sealant in the direction of the compressor. During operation of the compressor, the ball 26 is lifted upwardly out of the valve seat 28 by the air flowing in from the compressor through the gas inlet 22. If the compressor is switched off during the operation then the ball 26 falls again in the direction of the valve seat 28, brought about solely by gravity, and closes the gas inlet 22. Sealant from the container 10 can thus not pass in the direction of the compressor even when this produces no pressure.

### Reference numeral list

- 10: container
- 12: container wall
- 14: outer thread
- 16: connection stub
- 18: container inner space
- 20: removal unit
- 22: gas inlet
- 23: inlet tube
- 24: end section of the gas inlet
- 26: ball
- 28: valve seat
- 30: wall of the end section
- 32: non-return valve
- 40: outlet
- 42: internal thread
- 44: tube stub
- 46: outlet tube
- 50: standing frame
- 52: projecting lug

- A: internal diameter of the end section
- B: ball diameter
- C: internal diameter of the gas inlet beneath the valve seat
- D: reduced internal dimension

## Claims

1. An apparatus for the sealing of inflatable articles, in particular tires which includes the following:
- a pressure-tight container (10) for receiving a sealant and having a connection element (16),
- a removal unit (20) for the connection, preferably for a screw connection to the connection element (16) of the container (10),
- a gas inlet (22) and an outlet (40) which can be coupled to the article to be sealed, the gas inlet and the outlet being arranged in the removal unit (20) and communicating via the container inner space (18) when the removal unit (20) is connected to the connection element (16) of the container, and
- a non-return valve (32) which is provided in the gas inlet (22) in such a way that it closes when elevated pressure prevails in the container (10) and has a closure element (26), preferably a ball which is sealingly pressed by elevated pressure in the container (10) onto a valve seat (28) in the gas inlet,
**characterized in that**
- the non-return valve (32) is provided in an end section (24) of the gas inlet (22) which opens, without being deflected, to the container (10) when the removal unit (20) is connected to the container (10),
- the end section (24) of the gas inlet (22) projects beyond the rest of the removal unit, and
- to prevent the escape of the closure element (26) out of the end section (24) of the gas inlet (22), a deformation of the inner wall of the end section (24) of the gas inlet is provided which is dimensioned such that the closure element (26) cannot pass it.

2. An apparatus in accordance with claim 1, **characterized in that** the gas inlet (22) and the outlet (40) are coaxially arranged to one another in the region of the end section (24) of the gas inlet (22) with the outlet (40) surrounding the gas inlet (22) in this region.

3. An apparatus in accordance with one of the claims 1 or 2, **characterized in that**
- the closure element includes a ball (26),
- the end section (24) of the gas inlet (22) includes a cylindrical tube (30) and
- the deformation includes a deviation of the end section (24) from a cylindrical shape achieved preferably by pressing together the end section (24).

4. An apparatus in accordance with one of the claims 1 or 2, **characterized in that** the end section (24) of the gas inlet (22) comprises a plurality, preferably three projecting lugs projecting inwardly, which are of a dimension and being disposed such that the free internal dimension of the end section (24) in the region of the projecting lugs (52) is smaller than the outer dimension of the closure element (26).

5. An apparatus in accordance with any one of the claims 1 to 4, **characterized in that** the non-return valve (32) is provided in a region of the gas inlet (22) which is vertically aligned and the valve seat (28) is arranged beneath the closure element (26) when the removal unit (20) is connected to the connection element (16) of the container (10) and the container (10) is inverted.

6. An apparatus in accordance with any one of the claims 1 to 5, **characterized in that** the gas inlet (22) can be connected upstream of the non-return valve (32) to a gas pressure source.

7. An apparatus in accordance with any one of the claims 1 to 6, **characterized in that** the container (10) and/or the removal unit (20) is/ are manufactured from plastic which is preferably capable of being recycled.

8. A removal unit, in particular for an apparatus in accordance with one or more of the preceding claims, which includes the following:
- a connection device (42), preferably a thread, for the connection to a connection element (16) of a pressure-tight container (10) for the reception of a sealant,
- a gas inlet (22) and an outlet (40) which can be coupled to an article to be sealed, the gas inlet and the outlet being arranged in the removal unit (20) and communicating via the inner space (18) of the container when the removal unit (20) is connected to a connection element (16) of a container (10), and
- a non-return valve (32) which is provided in the gas inlet (22) in such a way that it closes when elevated pressure prevails in an attached container (10) and has a closure element (26), preferably a ball sealingly pressed into a valve seat (28) in the gas inlet (22) by elevated pressure in the attached container (10),
**characterized in that**
- the non-return valve (32) is provided in an end section (24) of the gas inlet (22) which opens to the container (10) without being deflected when the removal unit (20) is connected to a container (10),
- the end section (24) of the gas inlet (22) projects beyond the rest of the removal unit, and
- for the prevention of the escape of the closure element (26) from the end section (24) of the gas inlet (22), a deformation of the internal wall of the end section (24) of the gas inlet (22) is provided which is dimensioned such that the closure element (26) cannot pass it.

9. A removal unit in accordance with claim 8, **characterized in that** the gas inlet (22) and the outlet (40) are arranged coaxial to one another in the region of the end section (24) of the gas inlet (22), with the outlet (40) surrounding the gas inlet (22) in this region.

10. A removal unit in accordance with one of the claims 8 or 9, **characterized in that**
- the closure element includes a ball (16),
- the end section (24) of the gas inlet (22) includes a cylindrical tube (30) and
- the deformation includes a deviation of the end section (24) from the cylindrical shape which is preferably achieved by pressing together the end section (24).

11. A removal unit in accordance with one of the claims 8 or 9, **characterized in that** the end section (24) of the gas inlet (22) comprises a plurality, preferably three projecting lugs projecting inwardly, which are of a dimension and being disposed such that the free internal dimension of the end section (24) in the region of the projecting lugs (52) is smaller than the outer dimension of the closure element (26).

12. A removal unit in accordance with any one of the claims 8 to 11, **characterized in that** the non-return valve (32) is provided in a region of the gas inlet (22) which is vertically aligned and the valve seat (28) is arranged beneath the closure element (26) when the removal unit (20) is connected to the connection element (16) of a container (10) and the container (10) stands on its head.

13. A removal unit in accordance with any one of the claims 8 to 12, **characterized in that** the gas inlet (22) can be connected upstream of the non-return valve (32) to a gas pressure source.

14. A removal unit in accordance with any one of the claims 8 to 13, **characterized in that** the removal unit (20) is manufactured of plastic which is preferably capable of being recycled.

15. A removal unit in accordance with any one of the claims 8 to 14, **characterized in that** the removal unit (20) is made in one piece with the exception of the closure element (26) of the non-return valve (32).

## Patentansprüche

1. Vorrichtung für das Abdichten aufblasbarer Gegenstände, insbesondere Reifen, die das Folgende umfasst:
- einen druckdichten Behälter (10) zur Aufnahme eines Dichtmittels und mit einem Verbindungselement (16),
- eine Entfernungseinheit (20) für die Verbindung, bevorzugt für eine Schraubverbindung mit dem Verbindungselement (16) des Behälters (10),
- einen Gaseinlass (22) und einen Auslass (40), die mit dem abzudichtenden Gegenstand gekoppelt werden können, wobei der Gaseinlass und der Auslass in der Entfernungseinheit (20) angeordnet sind und über den Behälterinnenraum (18) kommunizieren, wenn die Entfernungseinheit (20) mit dem Verbindungselement (16) des Behälters verbunden ist, und
- ein Rückschlagventil (32), das in dem Gaseinlass (22) auf solche Weise vorgesehen ist, dass es schließt, wenn ein erhöhter Druck in dem Behälter (10) vorherrscht, und ein Verschlusselement (26), bevorzugt eine Kugel, besitzt, die durch den erhöhten Druck in dem Behälter (10) abdichtend auf einen Ventilsitz (28) in dem Gaseinlass gepresst wird,
**dadurch gekennzeichnet, dass**
- das Rückschlagventil (32) in einem Endabschnitt (24) des Gaseinlasses (22) vorgesehen ist, der sich ohne Auslenkung zu dem Behälter (10) öffnet, wenn die Entfernungseinheit (20) mit dem Behälter (10) verbunden ist,
- der Endabschnitt (24) des Gaseinlasses (22) über den Rest der Entfernungseinheit vorragt, und
- zum Verhindern des Entweichens des Verschlusselements (26) aus dem Endabschnitt (24) des Gaseinlasses (22) eine Verformung der Innenwand des Endabschnittes (24) des Gaseinlasses vorgesehen ist, die so bemessen ist, dass das Verschlusselement (26) nicht vorbei gelangen kann.

2. Vorrichtung nach Anspruch 1, **dadurch gekennzeichnet, dass** der Gaseinlass (22) und der Auslass (40) koaxial zueinander in dem Bereich des Endabschnittes (24) des Gaseinlasses (22) angeordnet sind, wobei der Auslass (40) den Gaseinlass (22) in diesem Bereich umgibt.

3. Vorrichtung nach einem der Ansprüche 1 oder 2, **dadurch gekennzeichnet, dass**
- das Verschlusselement eine Kugel (26) aufweist,
- der Endabschnitt (24) des Gaseinlasses (22) ein zylindrisches Rohr (30) aufweist, und
- die Verformung eine Abweichung des Endabschnittes (24) von einer zylindrischen Form aufweist, die bevorzugt durch Zusammenpressen des Endabschnittes (24) erreicht wird.

4. Vorrichtung nach einem der Ansprüche 1 oder 2, **dadurch gekennzeichnet, dass** der Endabschnitt (24) des Gaseinlasses (22) eine Mehrzahl, bevorzugt drei vorragende Ansätze, die einwärts vorragen, umfasst, die eine Abmessung besitzen und derart angeordnet sind, dass die freie Innenabmessung des Endabschnitts (24) in dem Bereich der vorragenden Ansätze (52) kleiner als die Außenabmessung des Verschlusselements (26) ist.

5. Vorrichtung nach einem der Ansprüche 1 bis 4, **dadurch gekennzeichnet, dass** das Rückschlagventil (32) in einem Bereich des Gaseinlasses (22) vorgesehen ist, der vertikal ausgerichtet ist, und der Ventilsitz (28) unterhalb des Verschlusselements (26) angeordnet ist, wenn die Entfernungseinheit (20) mit dem Verbindungselement (16) des Behälters (10) verbunden und der Behälter (10) umgedreht ist.

6. Vorrichtung nach einem der Ansprüche 1 bis 5, **dadurch gekennzeichnet, dass** der Gaseinlass (22) stromaufwärts des Rückschlagventils (32) mit einer Gasdruckquelle verbunden sein kann.

7. Vorrichtung nach einem der Ansprüche 1 bis 6, **dadurch gekennzeichnet, dass** der Behälter (10) und/oder die Entfernungseinheit (20) aus Kunststoff hergestellt ist/sind, der bevorzugt recycelbar ist.

8. Entfernungseinheit, insbesondere für eine Vorrichtung nach einem oder mehreren der vorhergehenden Ansprüche, die das Folgende umfasst:
- eine Verbindungsvorrichtung (42), bevorzugt ein Gewinde, für die Verbindung mit einem Verbindungselement (16) eines druckdichten Behälters (10) für die Aufnahme eines Dichtmittels,
- einen Gaseinlass (22) und einen Auslass (40), der mit einem abzudichtenden Gegenstand gekoppelt werden kann, wobei der Gaseinlass und der Auslass in der Entfernungseinheit (20) angeordnet sind und über den Innenraum (18) des Behälters kommunizieren, wenn die Entfernungseinheit (20) mit einem Verbindungselement (16) eines Behälters (10) verbunden ist, und
- ein Rückschlagventil (32), das in dem Gaseinlass (22) auf solche Weise vorgesehen ist, dass es schließt, wenn in einem befestigten Behälter (10) ein erhöhter Druck vorherrscht, und ein Verschlusselement (26), bevorzugt eine Kugel, aufweist, die abdichtend in einen Ventilsitz (28) in dem Gaseinlass (22) durch erhöhten Druck in dem befestigten Behälter (10) gepresst wird,
**dadurch gekennzeichnet, dass**
- das Rückschlagventil (32) in einem Endabschnitt (24) des Gaseinlasses (22) vorgesehen ist, der sich ohne Auslenkung zu dem Behälter (10) öffnet, wenn die Entfernungseinheit (20) mit einem Behälter (10) verbunden ist,
- der Endabschnitt (24) des Gaseinlasses (22) über den Rest der Entfernungseinheit vorragt, und
- für das Verhindern des Entweichens des Verschlusselements (26) von dem Endabschnitt (24) des Gaseinlasses (22) eine Verformung der Innenwand des Endabschnittes (24) des Gaseinlasses (22) vorgesehen ist, die so bemessen ist, dass das Verschlusselement (26) nicht vorbei gelangen kann.

9. Entfernungseinheit nach Anspruch 8, **dadurch gekennzeichnet, dass** der Gaseinlass (22) und der Auslass (40) koaxial zueinander in dem Bereich des Endabschnittes (24) des Gaseinlasses (22) angeordnet sind, wobei der Auslass (40) den Gaseinlass (22) in diesem Bereich umgibt.

10. Entfernungseinheit nach einem der Ansprüche 8 oder 9, **dadurch gekennzeichnet, dass**
- das Verschlusselement eine Kugel (16) aufweist,
- der Endabschnitt (24) des Gaseinlasses (22) ein zylindrisches Rohr (30) aufweist, und
- die Verformung eine Abweichung des Endabschnittes (24) von der zylindrischen Form aufweist, die bevorzugt durch Zusammenpressen des Endabschnittes (24) erreicht wird.

11. Entfernungseinheit nach einem der Ansprüche 8 oder 9, **dadurch gekennzeichnet, dass** der Endabschnitt (24) des Gaseinlasses (22) eine Mehrzahl, bevorzugt drei vorragende Ansätze, die einwärts vorragen, umfasst, die eine Abmessung besitzen und so angeordnet sind, dass die freie Innenabmessung des Endabschnitts (24) in dem Bereich der vorragenden Ansätze (52) kleiner als die Außenabmessung des Verschlusselementes (26) ist.

12. Entfernungseinheit nach einem der Ansprüche 8 bis 11, **dadurch gekennzeichnet, dass** das Rückschlagventil (32) in einem Bereich des Gaseinlasses (22) vorgesehen ist, der vertikal ausgerichtet ist, und der Ventilsitz (28) unterhalb des Verschlusselements (26) angeordnet ist, wenn die Entfernungseinheit (20) mit dem Verbindungselement (16) eines Behälters (10) verbunden ist und der Behälter (10) auf seinem Kopf steht.

13. Entfernungseinheit nach einem der Ansprüche 8 bis 12, **dadurch gekennzeichnet, dass** der Gaseinlass (22) stromaufwärts des Rückschlagventils (32) mit einer Gasdruckquelle verbunden sein kann.

14. Entfernungseinheit nach einem der Ansprüche 8 bis 13, **dadurch gekennzeichnet, dass** die Entfernungseinheit (20) aus Kunststoff hergestellt ist, der bevorzugt recycelbar ist.

15. Entfernungseinheit nach einem der Ansprüche 8 bis 14, **dadurch gekennzeichnet, dass** die Entfernungseinheit (20) mit Ausnahme des Verschlusselements (26) des Rückschlagventils (32) einteilig ausgebildet ist.

## Revendications

1. Appareil pour sceller des articles gonflables, en particulier des pneumatiques, qui inclut les éléments suivants :
- un conteneur étanche à la pression (10) pour recevoir un agent de scellement et ayant un élément de connexion (16),
- une unité d'enlèvement (20) pour la connexion, de préférence pour une connexion vissée, avec l'élément de connexion (16) du conteneur (10),
- une entrée de gaz (22) et une sortie (40) qui peuvent être couplées à l'article à sceller, l'entrée de gaz et la sortie étant agencées dans l'unité d'enlèvement (20) et communiquant via l'espace intérieur (18) du conteneur quand l'unité d'enlèvement (20) est connectée à l'élément de connexion (16) du conteneur, et
- un clapet anti retour (32) qui est prévu dans l'entrée de gaz (22) de telle manière qu'il se ferme quand une pression élevée règne dans le conteneur (10) et possède un élément de fermeture (26), de préférence une bille qui est pressée de manière étanche par une pression élevée dans le conteneur (10) sur un siège de valve (28) dans l'entrée de gaz,
**caractérisé en ce que**
- le clapet anti retour (32) est prévu dans une section terminale (24) de l'entrée de gaz (22) qui s'ouvre, sans être défléchie, vers le conteneur (10) quand l'unité d'enlèvement (20) est connectée au conteneur (10),
- la section terminale (24) de l'entrée de gaz (22) se projette au-delà du reste de l'unité d'enlèvement, et
- pour empêcher que l'élément de fermeture (26) s'échappe hors de la section terminale (24) de l'entrée de gaz (22), il est prévu une déformation de la paroi intérieure de la section terminale (24) de l'entrée de gaz, qui est dimensionnée de telle façon que l'élément de fermeture (26) ne peut pas la dépasser.

2. Appareil selon la revendication 1, **caractérisé en ce que** l'entrée de gaz (22) et la sortie (40) sont agencées coaxialement l'une par rapport à l'autre dans la région de la section terminale (24) de l'entrée de gaz (22), de sorte que la sortie (40) entoure l'entrée de gaz (22) dans cette région.

3. Appareil selon l'une des revendications 1 ou 2, **caractérisé en ce que**
- l'élément de fermeture inclut une bille (26),
- la section terminale (24) de l'entrée de gaz (22) inclut un tube cylindrique (30), et
- la déformation inclut une déviation de la section terminale (24) depuis une forme cylindrique, obtenue de préférence par pressage de la section terminale (24) sur elle-même.

4. Appareil selon l'une des revendications 1 ou 2, **caractérisé en ce que** la section terminale (24) de l'entrée de gaz (22) comprend une pluralité, de préférence trois tétons en projection qui se projettent vers l'intérieur, qui sont d'une dimension telle est sont disposés de telle façon que la dimension interne libre de la section terminale (24) dans la région des tétons en projection (52) est plus petite que la dimension extérieure de l'élément de fermeture (26).

5. Appareil selon l'une quelconque des revendications 1 à 4, **caractérisé en ce que** le clapet anti retour (32) est prévu dans une région de l'entrée de gaz (22) qui est alignée verticalement, et le siège de valve (28) est agencé au-dessous de l'élément de fermeture (26) quand l'unité d'enlèvement (22) est connectée à l'élément de connexion (16) du conteneur (10) et que le conteneur (10) est inversé.

6. Appareil selon l'une quelconque des revendications 1 à 5, **caractérisé en ce que** l'entrée de gaz (22) peut être connectée en amont du clapet anti retour (32) à une source de gaz sous pression.

7. Appareil selon l'une quelconque des revendications 1 à 6, **caractérisé en ce que** le conteneur (10) et/ou l'unité d'enlèvement (20) est/sont fabriqué(s) en matière plastique, laquelle est de préférence capable d'être recyclée.

8. Unité d'enlèvement, en particulier pour un appareil selon l'une ou plusieurs des revendications précédentes, qui inclut les éléments suivants :
- un dispositif de connexion (42), de préférence un pas de vis, pour la connexion à un élément de connexion (16) d'un conteneur étanche à la pression (10) pour la réception d'un agent de scellement,
- une entrée de gaz (22) et une sortie (40) qui peut être couplée à un article à sceller, l'entrée de gaz et la sortie étant agencées dans l'unité d'enlèvement (20) et communiquant via l'espace intérieur (18) du conteneur quand l'unité d'enlèvement (20) est connectée à un élément de connexion (16) d'un conteneur (10), et
- un clapet anti retour (32) qui est prévu dans l'entrée de gaz (22) de telle manière qu'il se ferme quand une pression élevée règne dans un conteneur attaché (10) et possède un élément de fermeture (26), de préférence une bille pressée de façon étanche dans un siège de valve (28) dans l'entrée de gaz (22) par une pression élevée dans le conteneur attaché (10),
**caractérisée en ce que**
- le clapet anti retour (32) est prévu dans une section terminale (24) de l'entrée de gaz (22) qui s'ouvre vers le conteneur (10) sans être défléchie quand l'unité d'enlèvement (20) est connectée à un conteneur (10),
- la section terminale (24) de l'entrée de gaz (22) se projette au-delà du reste de l'unité d'enlèvement, et
- pour empêcher l'échappement de l'élément de fermeture (26) hors de la section terminale (24) de l'entrée de gaz (22), il est prévu une déformation de la paroi interne de la section terminale (24) de l'entrée de gaz (22), avec une dimension telle que l'élément de fermeture (26) ne peut pas la dépasser.

9. Unité d'enlèvement selon la revendication 8, **caractérisée en ce que** l'entrée de gaz (22) et la sortie (40) sont agencées coaxialement l'une à l'autre dans la région de la section terminale (34) de l'entrée de gaz (22), la sortie (40) entourant l'entrée de gaz (22) dans cette région.

10. Unité d'enlèvement selon l'une des revendications 8 ou 9, **caractérisée en ce que**
- l'élément de fermeture inclut une bille (16),
- la section terminale (24) de l'entrée de gaz (22) inclut un tube cylindrique (30), et
- la déformation inclut une déviation de la section terminale (24) depuis la forme cylindrique, qui est de préférence obtenue en pressant la section terminale (24) sur elle-même.

11. Unité d'enlèvement selon l'une des revendications 8 ou 9, **caractérisée en ce que** la section terminale (24) de l'entrée de gaz (22) comprend une pluralité, de préférence trois tétons en projection qui se projettent vers l'intérieur, qui ont une dimension telle et qui sont disposés de telle façon que la dimension interne libre de la section terminale (24) dans la région des tétons en projection (52) est plus petite que la dimension extérieure de l'élément de fermeture (26).

12. Unité d'enlèvement selon l'une quelconque des revendications 8 à 11, **caractérisée en ce que** le clapet anti retour (32) est prévu dans une région de l'entrée de gaz (22) qui est verticalement alignée et le siège de valve (28) est agencé au-dessous de l'élément de fermeture (26) quand l'unité d'enlèvement (20) est connectée à l'élément de connexion (16) d'un conteneur (10) et que le conteneur (10) est dressé tête en bas.

13. Unité d'enlèvement selon l'une quelconque des revendications 8 à 12, **caractérisée en ce que** l'entrée de gaz (22) peut être connectée en amont du clapet anti retour (32) à une source de gaz sous pression.

14. Unité d'enlèvement selon l'une quelconque des revendications 8 à 13, **caractérisée en ce que** l'unité d'enlèvement (20) est fabriquée en matière plastique, laquelle est de préférence capable d'être recyclée.

15. Unité d'enlèvement selon l'une quelconque des revendications 8 à 14, **caractérisée en ce que** l'unité d'enlèvement (20) est réalisée d'une seule pièce à l'exception de l'élément de fermeture (26) du clapet anti retour (32).
